# EUROPEAN PATENT APPLICATION

(11) **EP 1 496 698 A1**
(43) Date of publication of application: **12.01.2005**
(21) Application number: 03719107.9
(22) Date of filing: 15.04.2003
(51) Int. Cl.: H04N 5/92

(54) **RECORDING AND REPRODUCING DEVICE**

(30) Priority: 15.04.2002 JP 2002111720
(71) Applicant: MATSUSHITA ELECTRIC INDUSTRIAL CO., LTD., Kadoma-shi, Osaka 571-8501 (JP)
(72) Inventor: WADA, Noriaki, Kobe-shi, Hyogo 651-2243 (JP); FUKUSHIMA, Yasushi, Katano-shi, Osaka 576-0033 (JP); TAGUCHI, Katsuyuki, Hirakata-shi, Osaka 573-0093 (JP)
(74) Representative: Grünecker, Kinkeldey, Stockmair & Schwanhäusser Anwaltssozietät
(86) International application number: PCT/JP2003/004736
(87) International publication number: WO 2003/088659

(57) **Abstract**

In an image pickup apparatus used for interlaced scan, slow motion video, the prior art has had the problem that the slow motion video suffers a vertical phase shift or becomes discontinuous in time.

The invention comprises: video storing means 2 of recording and playing back the sequential scan video signal captured by a sequential scan image pickup means 1 through a light input 100 and output from the sequential scan image pickup means 1 for i frames (i is an integer not smaller than 1) over a period of time T1 (T1 is a positive number); and sequential scan/interlaced scan converting means 3 of generating an interlaced scan video signal for m fields (m is an integer not smaller than 2) from each frame of the played back i-frame sequential scan video signal, wherein the interlaced scan video signal is output for i × m fields over a period of time T2 (T2 is a number larger than T1).

## Description

### TECHNICAL FIELD

The present invention relates to an image pickup apparatus that is adapted to obtain slow motion video, and more particularly to an image pickup apparatus that is adapted to obtain high definition slow motion video.

### BACKGROUND ART

In today's television broadcasts of sports programs and other events, slow motion video is heavily used. This technically makes a rapid motion easier to recognize visually by presenting the rapid motion at a slower rate and thereby lowering in frequency the high frequency components along time axis to which human vision has a poor response.

On the other hand, in recent years, higher definition video formats than the traditional NTSC system have come to be employed as broadcast video formats, and programs using high definition video are being produced. With this trend, the need has been increasing for apparatuses designed to capture slow motion video in high definition video.

Against this backdrop, image pickup apparatuses of obtaining slow motion video have been known in the prior art, including the one described in "A triple Scan Digital Processing Camera for Slow-Motion", presented at the 1996 Annual Meeting of The Institute of Image Information and Television Engineers, and the one described in Japanese Unexamined Patent Publication No. 2000-106642.

The entire disclosures of "A triple Scan Digital Processing Camera for Slow-Motion", presented at the 1996 Annual Meeting of The Institute of Image Information and Television Engineers, and Japanese Unexamined Patent Publication No. 2000-106642, are incorporated herein by reference in their entireties.

The prior art image pickup apparatus disclosed in Japanese Unexamined Patent Publication No. 2000-106642 will be described below.

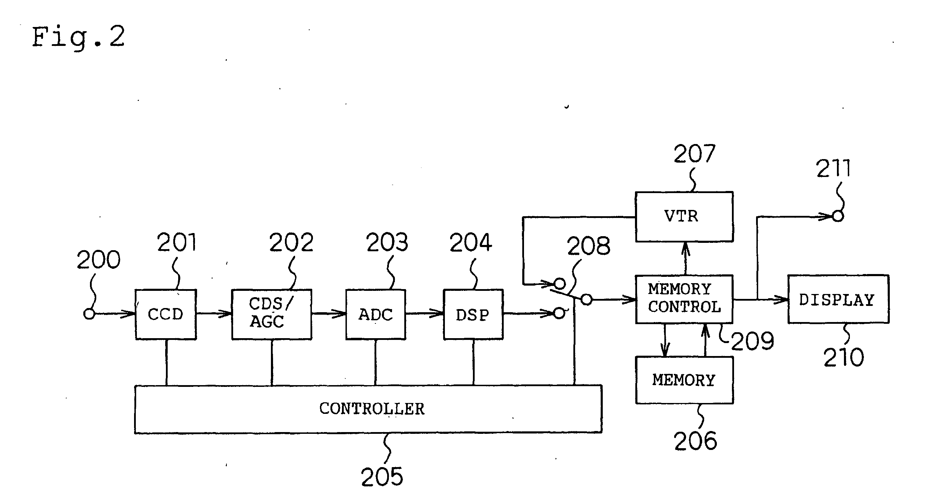

Figure 2 shows the configuration of the prior art image pickup apparatus disclosed in Japanese Unexamined Patent Publication No. 2000-106642. Reference numeral 200 is a light input, 201 is a CCD image sensor which captures an image of a subject, 202 is a CDS/AGC circuit which, using a correlated double sampling technique, eliminates noise components from the image signal supplied from the CCD image sensor 201, and amplifies it with a suitable gain for output, 203 is an ADC circuit which converts the output of the CDS/AGC circuit 202 into digital form, 204 is a digital signal processor (DSP) which applies prescribed video processing to the output of the ADC circuit 203, 205 is a controller which controls the entire apparatus, 206 is a memory which temporarily stores a video signal output from the DSP 204, 207 is a VTR which records and plays back the video signal output from the DSP 204 on a video tape, 208 is a selector switch which selects the video signal from the DSP 204 for output when recording the video signal, and selects the video signal played back from the VTR 207 for output when playing back the video signal, 209 is a memory control circuit which controls reading from and writing to the memory 206, 210 is a display which displays the video signal according to the output of the selector switch 208, and 211 is an external output terminal.

The operation of the thus configured prior art image pickup apparatus will be described below.

The CCD image sensor 201 has an imaging area consisting of a large number of photoelectric conversion elements arranged in a lattice pattern, and the charge accumulated by each photoelectric conversion element through exposure to light is output as an electrical signal. Reading of each photoelectric conversion element from the CCD image sensor 201 is done a plurality of times within one field period.

The operation for VTR recording will be described below by taking triple speed image capturing as an example.

First, the controller 205 supplies a readout control signal to each photoelectric conversion element at intervals of 1/180 of a second so that the charge of each photoelectric conversion element will be read out at three times the normal rate. As a result, the charge accumulated in each photoelectric conversion element is read out at intervals of 1/180 of a second.

When the image signal from the CCD image sensor 201 is supplied, the CDS/AGC 202 eliminates reset noise, etc. from the image signal by applying noise elimination processing based on the so-called correlated double sampling method, amplifies the resulting signal with a suitable gain, and supplies the amplified signal to the ADC 203. The output of the CDS/AGC 202 is converted by the ADC 203 into a digital signal.

The DSP 204 performs color separation (RGB) based on the image signal obtained from a complementary color filter array, applies prescribed video processing, etc. to the image signal, and supplies the resulting signal to the selector switch 208. The selector switch 208 is controlled so as to select the output of the DSP 204 at the time of image capturing (recording). As a result, the video signal from the DSP 204 is supplied field by field to the memory control circuit 209 via the selector switch 208.

The memory control circuit 209 performs control so that the video signal supplied via the selector switch 208 is temporarily stored in the memory 206, and reads out the stored video signal field by field at the normal recording rate for supply to the VTR 207. The VTR 207 can thus record images of the desired subject field by field on a video tape.

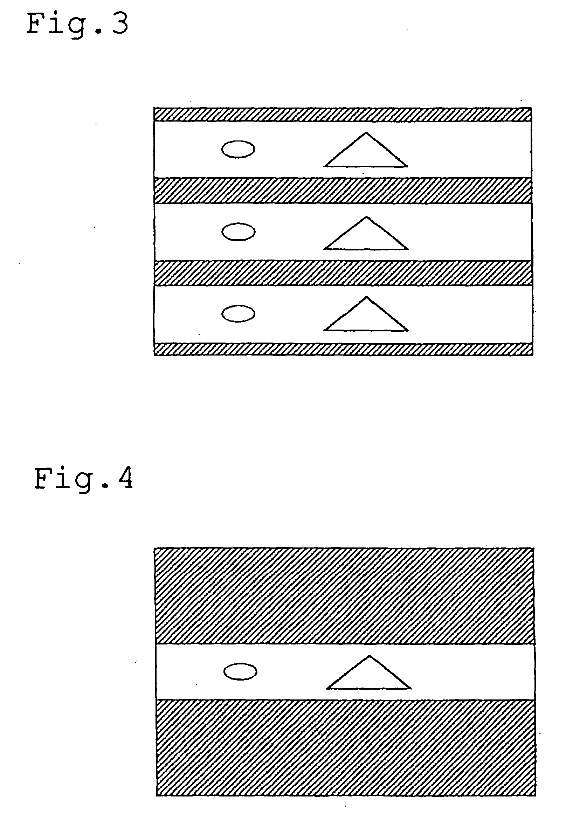

The VTR 207 records a plurality of images within one field. In the prior art shown here, since the charge of each photoelectric conversion element is read out three times in one field period, three images are recorded one above another as shown in Figure 3.

An identification signal indicating the number of images recorded in one field period is also recorded when recording the images on the VTR 207. In the prior art, since there are three images in one field period, an identification signal indicating n = 3 is recorded. The identification signal further includes display position information indicating where in the field the respective n images are recorded and in what sequence they are recorded. That is, in the prior art, display position information indicating that three images are recorded in sequence from top to bottom in order of time series is recorded as the identification signal.

Next, the operation for playing back the thus recorded image signal will be described.

First, the controller 205 performs control to play back the VTR 207. The VTR 207 plays back the video signal field by filed from the video tape, and supplies the playback signal to the selector switch 208. When playing back the playback signal, the identification signal to be used for slow motion playback is also played back together with the video signal.

In playback, the selector switch 208 is controlled so as to select the playback signal output from the VTR 207. As a result, the playback signal from the VTR 207 is supplied field by field to the display 210 and also to the external output terminal 211, via the selector switch 208 and the memory control circuit 209.

In this way, the recorded video can be displayed on the display 210 and, when a monitor device of a television receiver or the like is connected to the external output terminal 211, the recorded image can be displayed on the monitor device.

Slow motion playback of the images recorded on the video tape is performed in the following manner.

First, the playback signal is read out by the VTR 207 for playback, and is temporarily stored in the memory 206 as it is read out. When reading out the playback signal, the identification signal is also read out.

Next, the memory control circuit 209 reorders the thus stored playback signal in order of time series in accordance with the identification signal so that the images will be displayed on the display 210, one image in each field as shown in Figure 4. The playback speed at this time is 1/(n × m) based on the value of n = 3 carried in the identification signal. Here, the value of m can be suitably chosen by the operator.

That is, in the prior art, the value of n is determined by the identification signal, and the value of m is determined by operator selection, thus determining the slow motion playback speed. For example, when m = 1 by operator selection, the slow motion playback speed is 1/3 of the normal speed, and when m = 2, the slow motion playback speed is 1/6 of the normal speed. The reordering of images in the memory control circuit 209 is done based on the image display position information carried in the identification signal. In the prior art shown here, since three images are recorded within one field in sequence from top to bottom in order of time series, the memory control circuit 209 reads out the n images from the memory 206 in sequence from the top for display on the display 210.

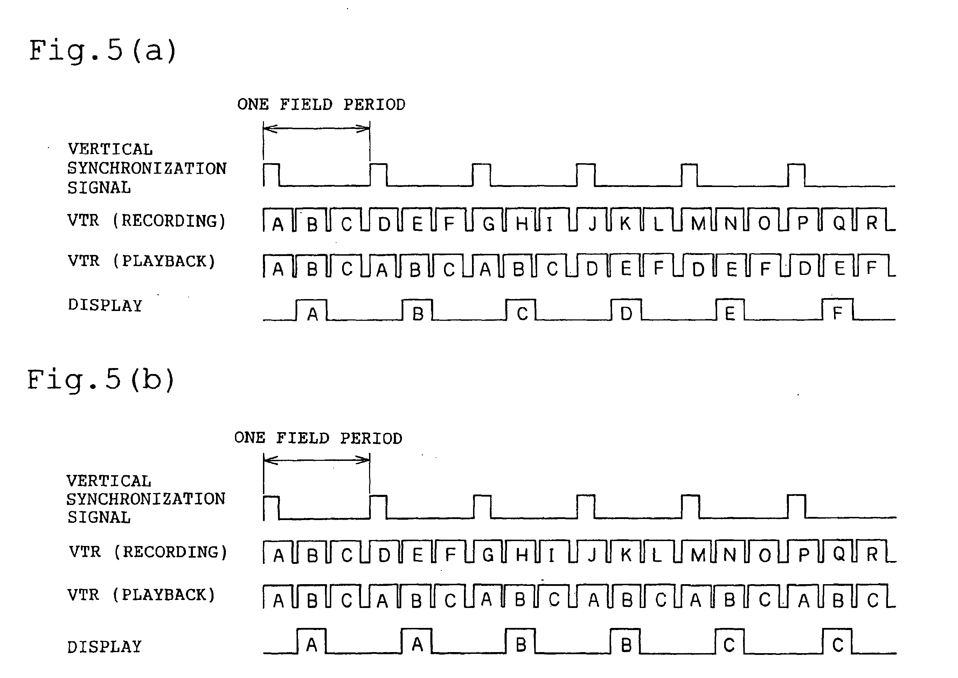

The time chart for the above playback operation is shown in Figure 5. Part (a) of the figure is for explaining the case where the operator has selected "m = 1" for 1/3 speed slow motion playback, while part (b) is for explaining the case where the operator has selected "m = 2" for 1/6 speed slow motion playback.

As shown in Figure 5, in VTR (RECORDING), a video signal carrying three images in each field period, that is, the period from one vertical synchronization signal VD to the next, is recorded. More specifically, images A, B, and C are recorded in the first field, and images D, E, and F are recorded in the next field.

When playing back the video signal, first the images A to C are read out at the normal rate in the first field, as shown in VTR (PLAYBACK). These images are stored in the memory 206, and then reordered in the memory control circuit 209 in accordance with the identification signal; the three images are sent to the display 210 repeatedly (n × m) times, that is, three times.

That is, in the illustrated example, since the value of n is 3, and "m = 1" is selected by the operator, the images are played back in slow motion at 1/(3 × 1) the normal speed; more specifically, as shown in VTR (PLAYBACK) in Figure 5(a), the three images A, B, and C are sent to the display 210 repeatedly three times over three fields.

Then, on the display 210, only the image A is displayed in the first field, only the image B is displayed in the second field, and only the image C is displayed in the third field. As a result, each image is displayed m times, that is, only once, and only one image in each field.

On the other hand, when the operator has selected "m = 2" for 1/6 speed slow motion playback, then as shown in Figure 5(b) the three images A to C recorded in one field period are read out from the VTR 207 and stored in the memory 206, and then reordered in the memory control circuit 209 in accordance with the identification signal; these three images are sent to the display 210 in each field period, which is repeated (3 × 2) times, that is, six times, as shown in VTR (PLAYBACK) in the figure.

Then, on the display 210, only the image A is displayed in the first and second fields, only the image B is displayed in the third and fourth fields, and only the image C is displayed in the fifth and sixth fields. As a result, each image is displayed m times, that is, two times in succession, and only one image in each field.

As described above, in the prior art, video for one field, which should normally be photoelectrically converted every 1/60th of a second, is photoelectrically converted every 1/180th of a second, i.e., at three times the normal rate, and slow motion video is obtained through time-axis conversion by using the memory and the VTR.

In the triple speed image pickup apparatus of the prior art, reading of one-field video from the photoelectrical conversion elements forming the pixels must be done in 1/180 of a second. Even in the case of double speed image capturing, reading from the photoelectrical conversion elements must be done in 1/120 of a second. However, in the case of a high definition video CCD image sensor designed to conform to the video format defining an effective screen of 1920 pixels horizontally and 1080 pixels vertically, interlaced scanning, and a field frequency of 59.94 Hz, it is said that double speed operation or triple speed operation is difficult to achieve because of its operating speed problem. That is, the prior art has had the problem that high definition video cannot be captured at high speed because of the limited operating speed of elements.

Further, when video of an interlaced scanning format is output for display, the prior art image pickup apparatus has had the problem that the output images are displaced in the vertical direction. For example, in the operation of Figure 5(b), "A" is output to the display monitor in the first and second fields, but since the scanning lines in the first and second fields are displaced in the vertical direction in interlaced scanning, the displayed images are displaced in the vertical direction. This problem occurs irrespective of the video capturing speed. That is, this problem occurs when the same image is displayed a plurality of times for output as a video image conforming to the interlaced scanning format.

Further, suppose that double speed image capturing for interlaced scanning becomes possible in the future, and that "A" as the video for the first field is photoelectrically converted in 1/120 of a second and "B" as the video for the second field is photoelectrically converted in the next 1/120 of a second. Then, suppose that the images "A" and "B" as interlaced scanned video images, one displaced from the other in the vertical direction in the 1/60-second period, is read out from the CCD image sensor and recorded on the VTR. Here, even if the method of playing back "A" and "B" with the first and second fields as a pair is employed in order to avoid the problem that the displayed images become displaced in the vertical direction, when the images are played back in the order of "A", "B", "A", and "B" for slow motion playback, there occurs the problem that the played back video becomes discontinuous with "A" being displayed after "B", thus moving backward in time.

### DISCLOSURE OF THE INVENTION

In view of the above-enumerated problems, it is an object of the present invention to provide a recording and playback apparatus that can produce smooth, high definition slow motion video by preventing an interlaced scan video signal, i.e., slow motion video, from shifting in phase in the vertical direction or becoming discontinuous video moving backward in time, and also provide an image pickup apparatus, a recording and playback method, a recording medium, and a program for use with the recording and playback apparatus.

A first invention provides a recording and playback apparatus comprising:
video storing means of recording and playing back the sequential scan video signal captured by a sequential scan image pickup means through a light input and output from the sequential scan image pickup means for i frames (i is an integer not smaller than 1) over a period of time T1 (T1 is a positive number); and
sequential scan/interlaced scan converting means of generating an interlaced scan video signal for m fields (m is an integer not smaller than 2) from each frame of the played back i-frame sequential scan video signal, wherein
the interlaced scan video signal is output for i × m fields over a period of time T2 (T2 is a number larger than T1).

A second invention provides a recording and playback apparatus as set forth in the first invention, wherein
when playing back the recorded sequential scan video signal, the video storing means plays back the recorded sequential scan video signal of the i frames over the period of time T2, and
the sequential scan/interlaced scan converting means generates the interlaced scan video signal of the m fields from each frame of the played back sequential scan video signal of the i frames over the period of time T2.

A third invention provides a recording and playback apparatus as set forth in the first invention, wherein
when playing back the recorded sequential scan video signal, the video storing means plays back the recorded sequential scan video signal of the i frames over the period of time T1, and
the sequential scan/interlaced scan converting means generates the interlaced scan video signal of the m fields from each frame of the played back sequential scan video signal of:the i frames over the period of time T2.

A fourth invention provides a recording and playback apparatus as set forth in the first invention, wherein
the sequential scan image pickup means is a sequential scan video camera with an effective screen of 720 vertical scan lines and a frame frequency of 59.94 Hz,
the sequential scan video signal is a sequential scan video signal defining an effective screen of 720 vertical scan lines with a frame frequency of 59.94 Hz, and
the interlaced scan video signal is an interlaced scan video signal defining an effective screen of 1080 vertical scan lines with a field frequency of 59.94 Hz.

A fifth invention provides a recording and playback apparatus as set forth in the first invention, wherein the video storing means is a hard disk which stores and plays back the captured sequential scan video signal.

A sixth invention provides a recording and playback apparatus as set forth in the first invention, wherein the video storing means stores the input sequential scan video signal on a recording medium after compressing information of the sequential scan video signal, and plays back the sequential scan video signal by expanding the information read out of the recording medium.

A seventh invention provides an image pickup apparatus which comprises:
sequential scan image pickup means of capturing an image through a light input and outputting a sequential scan video signal of i frames (i is an integer not smaller than 1) over a period of time T1 (T1 is a positive number);
video storing means of recording and playing back the captured sequential scan video; and
sequential scan/interlaced scan converting means of generating an interlaced scan video signal for m fields (m is an integer not smaller than 2) from each frame of the played back i-frame sequential scan video signal, wherein
the interlaced scan video signal is output for i × m fields over a period of time T2 (T2 is a number larger than T1).

According to an eighth invention, the image pickup apparatus of the seventh invention is characterized in that:
when playing back the recorded sequential scan video signal, the video storing means plays back the recorded sequential scan video signal of the i frames over the period of time T2; and
the sequential scan/interlaced scan converting means generates the interlaced scan video signal of the m fields from each frame of the played back sequential scan video signal of the i frames over the period of time T2.

According to a ninth invention, the image pickup apparatus of the seventh invention is characterized in that:
when playing back the recorded sequential scan video signal, the video storing means plays back the recorded sequential scan video signal of the i frames over the period of time T1; and
the sequential scan/interlaced scan converting means generates the interlaced scan video signal of the m fields from each frame of the played back sequential scan video signal of the i frames over the period of time T2.

A tenth invention provides a recording and playback method which comprises:
video storing step of recording and playing back the sequential scan video signal captured by a sequential scan image pickup means through a light input and output from the sequential scan image pickup means for i frames (i is an integer not smaller than 1) over a period of time T1 (T1 is a positive number); and
sequential scan/interlaced scan converting steps of generating an interlaced scan video signal for m fields (m is an integer not smaller than 2) from each frame of the played back i-frame sequential scan video signal, wherein
the interlaced scan video signal is output for i × m fields over a period of time T2 (T2 is a number larger than T1).

An eleventh invention provides a program for causing a computer to function in the recording and playback apparatus of the first invention as:
video storing means of recording and playing back the sequential scan video signal captured by a sequential scan image pickup means through a light input and output from the sequential scan image pickup means for i frames (i is an integer not smaller than 1) over a period of time T1 (T1 is a positive number); and
sequential scan/interlaced scan converting means of generating an interlaced scan video signal for m fields (m is an integer not smaller than 2) from each frame of the played back i-frame sequential scan video signal.

A twelfth invention provides a recording medium holding thereon the program of the eleventh invention and processable by a computer.

### BRIEF DESCRIPTION OF THE DRAWINGS

Figure 1 is a block diagram showing the configuration of an image pickup apparatus according to one embodiment of the present invention.
Figure 2 is a block diagram showing the configuration of an image pickup apparatus according to the prior art.
Figure 3 is a diagram for explaining how video is recorded on a VTR in the image pickup apparatus of the prior art.
Figure 4 is a diagram for explaining how slow motion video is played back in the image pickup apparatus of the prior art.
Figure 5 is a time chart illustrating the operation of the image pickup apparatus of the prior art.

### (DESCRIPTION OF REFERENCE NUMERALS)

- 1.: SEQUENTIAL SCAN IMAGE PICKUP MEANS
- 2.: VIDEO STORING MEANS
- 3.: SEQUENTIAL SCAN/INTERLACED SCAN CONVERTING MEANS
- 100.: LIGHT INPUT
- 101.: VIDEO CAMERA
- 102.: INFORMATION COMPRESSING CIRCUIT
- 103.: HARD DISK
- 104.: INFORMATION EXPANDING CIRCUIT
- 105.: SEQUENTIAL SCAN/INTERLACED SCAN CONVERSION CIRCUIT

### BEST MODE FOR CARRYING OUT THE INVENTION

Embodiments of the present invention will be described below with reference to the drawings.

### (Embodiment 1)

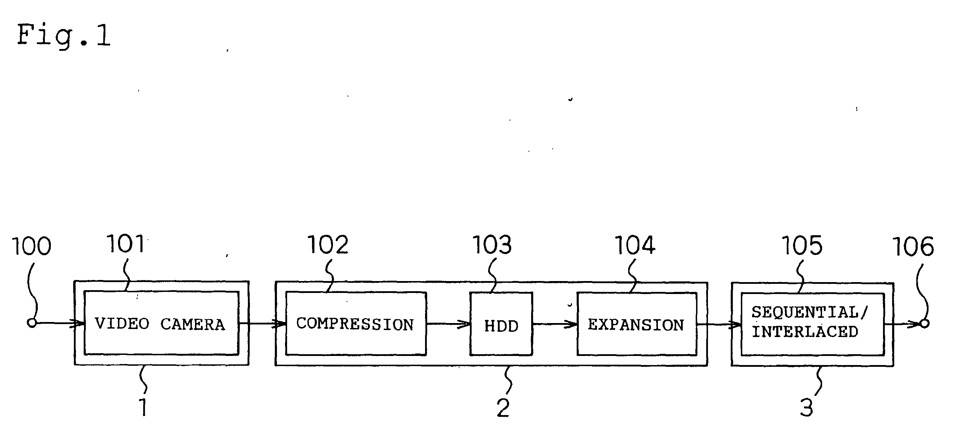

Figure 1 shows an image pickup apparatus according to a first embodiment of the present invention. In Figure 1, reference numeral 1 is a sequential scan image pickup means, 2 is a video storing means, 3 is a sequential scan/interlaced scan converting means, 100 is a light input, 101 is a sequential scan video camera with an effective screen of 720 vertical scan lines and a frame frequency of 59.94 Hz, 102 is an information compressing circuit, 103 is a hard disk, 104 is an information expanding circuit, and 105 is a sequential scan/interlaced scan conversion circuit which converts a sequential scan video signal defining an effective screen of 720 vertical scan lines into an interlaced scan video signal defining an effective screen of 1080 vertical scan lines.

The sequential scan image pickup means 1 in the present embodiment is an example of the sequential scan image pickup means of the present invention, the video storing means 2 in the present embodiment is an example of the video storing means of the present invention, and the sequential scan/interlaced scan converting means 105 in the present embodiment is an example of the sequential scan/interlaced scan converting means of the present invention.

The operation of the thus configured image pickup apparatus will be described below.

First, the sequential scan video camera 101 used as the sequential scan image pickup means 1 captures the light input 100 and outputs a sequential scan video signal. As for the video format, the number of effective scan lines in the vertical direction is 720, the total number of scan lines is 750, the number of effective pixels in the horizontal direction is 1280, the total number of pixels in the horizontal direction, including those in horizontal blanking, is 1650, and the frame frequency is 59.94 Hz; the sequential scan video signal is output in the form of a digital signal consisting of a luminance signal Y sampled by a clock of 74.176 MHz with 10-bit quantization and two color difference signals Pb and Pr sampled at 37.088 MHz with 10-bit quantization.

Next, the information compressing circuit 102 compresses the input sequential scan video signal in accordance with a JPEG scheme, and writes the compressed sequential scan video signal to the hard disk 103. On the other hand, the compressed sequential scan video signal read from the hard disk 103 is expanded in accordance with the JPEG scheme by the information expanding circuit 104 to reconstruct the sequential scan video signal.

Next, the sequential scan/interlaced scan conversion circuit 105 as the sequential scan/interlaced scan converting means 3 converts the sequential scan video signal defining the effective screen of 720 vertical scan lines into the interlaced scan video signal defining the effective screen of 1080 vertical scan lines; here, the video signal for one frame of sequential scanning is converted into the video signal for two fields of interlaced scanning.

Here, the hard disk 103 is controlled so that the period over which one frame of the sequential scan video signal is read out is twice as long as the period over which one frame is written. That is, in the video storing means 2, the number of frames per unit time when reading the sequential scan video signal for playback is one half of the number of frames per unit time when writing the captured sequential scan video signal for recording; therefore, when a sequential scan video signal having a frame frequency of 59.94 Hz is written, it is read out as a sequential scan video signal of 29.97 Hz. By converting this readout signal from sequential scan to interlaced scan, the sequential scan video signal for one frame is converted into the interlaced scan video signal for two fields. This means that the 29.97-Hz sequential scan video signal is converted into an interlaced scan video signal having a field frequency of 59.94 Hz.

That is, since an image captured at a rate of 1/59.94 of a second (one frame of sequential scanning) is converted into an image at a rate of 1/29.97 of a second (two fields of interlaced scanning), 1/2 speed slow motion can be achieved.

Alternatively, when reading the 29.97-Hz sequential scan video signal from the hard disk 103, control may be performed so that the same frame is read out twice in succession. By converting this readout signal from sequential scan to interlaced scan, the sequential scan video signal for one frame written to the hard disk 103 is converted into the interlaced scan video signal for four fields.

That is, since an image captured at a rate of 1/59.94 of a second (one frame of sequential scanning) is converted into an image at a rate of 1/14.99 of a second (four fields of interlaced scanning), 1/4 speed slow motion can be achieved.

The above description has been given by dealing with the case in which the sequential scan/interlaced scan conversion circuit 105 converts the video signal for one frame of sequential scanning into the video signal for two fields of interlaced scanning. However, depending on the design, the sequential scan/interlaced scan conversion circuit 105 may convert the video signal for one frame of sequential scanning into the video signal for only one field of interlaced scanning at a time. In this case, to obtain the interlaced scan video signal for one more field, the sequential scan video signal for the same one frame must be output from the hard disk 103 one more time.

In this case, the sequential scan video signal read from the hard disk 103 is a video signal of 59.94 Hz, but since the same sequential scan video signal is read out for two frames in succession, the obtained 59.94-Hz interlaced scan video signal provides 1/2 speed slow motion. When the same sequential scan video signal is read out for four frames in succession, 1/4 speed slow motion can be achieved.

In this way, the sequential scan image pickup means 1 captures an image through the light input 100, and outputs the sequential scan video signal for i frames (i is an integer not smaller than 1) over a period of time T1 (T1 is a positive number). Then, the video storing means 2 records and plays back the sequential scan video signal output from the sequential scan image pickup means 1.

Then, the sequential scan/interlaced scan conversion circuit 105 generates an interlaced scan video signal for m fields (m is an integer not smaller than 2) from each frame of the played back i-frame sequential scan video signal. The thus generated interlaced scan video signal is output for i × m fields over a period of time T2 (T2 is a number larger than T1). Accordingly, T1/T2 speed slow motion can be achieved.

In the above case, the sequential scan image pickup means 1 captures an image through the light input 100, and outputs the sequential scan video signal for i frames (i is an integer not smaller than 1) over the period of time T1 (T1 is a positive number); when playing back the recorded sequential scan video signal, the video storing means 2 plays back the recorded i-frame sequential scan video signal over the period of time T2 (T2 is a number larger than T1), and the sequential scan/interlaced scan converting means 3 generates the interlaced scan video signal for m fields from each frame of the played back i-frame sequential scan video signal over the period of time T2. That is, the video produced from the sequential scan video signal played back in the video storing means 2 is slower in time than the video produced from the sequential scan video signal output from the video camera 101 for recording. The video produced from the sequential scan video signal played back in the video storing means 2 and the video produced from the interlaced scan video signal converted by the sequential scan/interlaced scan converting means 3 are of the same speed.

In an alternative example, the sequential scan image pickup means 1 captures an image through the light input 100, and outputs the sequential scan video signal for i frames (i is an integer not smaller than 1) over the period of time T1 (T1 is a positive number); here, when playing back the recorded sequential scan video signal, the video storing means 2 may play back the recorded i-frame sequential scan video signal over the period of time T1, and the sequential scan/interlaced scan converting means 3 may generate the interlaced scan video signal for m fields from each frame of the played back i-frame sequential scan video signal over the period of time T2 (T2 is a number larger than T1). That is, they may be configured so that the video produced from the sequential scan video signal output from the video camera 101 for recording and the video produced from the sequential scan video signal played back in the video storing means 2 are of the same speed, and so that the video produced from the interlaced scan video signal converted by the sequential scan/interlaced scan converting means 3 is slower than the video produced from the sequential scan video signal played back in the video storing means 2. This corresponds, for example, to the case in which a VTR is used in place of the hard disk 103. In this case, a separate memory has to be used to temporarily store the sequential scan video signal played back from the VTR, as previously explained in the description of the prior art.

The thus configured and operating image pickup apparatus of the present invention comprises the sequential scan image pickup means 1 of capturing an image through the light input and outputting the sequential scan video signal, the video storing means 2 of storing and playing back the sequential scan video signal obtained from the sequential scan image pickup means 1, and the sequential scan/interlaced scan converting means 3 of converting the sequential scan video signal for one frame played back by the video storing means 2 into the interlaced scan video signal for two fields; in this configuration, since the video read out and played back by the video storing means 2 is sequential scan video, if the video of the same frame is read out any number of times, the phenomenon of the video moving backward in time does not occur. Further, since the sequential scan/interlaced scan converting means 3 performs the conversion by considering the phase shift in the vertical direction that occurs between the first and second fields, smooth slow motion video free from the vertical phase shift can be achieved.

Furthermore, since the sequential scan video camera 101 with an effective screen of 720 vertical scan lines and a frame frequency of 59.94 Hz is used as the sequential scan image pickup means 1, and since the sequential scan/interlaced scan conversion circuit 105 which converts the sequential scan video signal defining an effective screen of 720 vertical scan lines into the interlaced scan video signal defining an effective screen of 1080 vertical scan lines is used as the sequential scan/interlaced scan converting means 3, smooth video comparable to the slow motion video generated from the video captured at twice the normal speed can be achieved even in the case of a high definition video format.

Generally, in the case of a video camera that, by using a CCD image sensor, captures interlaced scanning video of an effective screen of 1080 vertical scan lines and a field frequency of 59.94 Hz, the CCD image sensor which has photoelectric conversion elements forming an effective screen of 1920 pixels horizontally and 1080 pixels vertically is operated with a clock of 74.176 MHz, but at the present state of technology, it is difficult to operate the CCD image sensor at twice that clock frequency, i.e., at 148 MHz; further, even if a drive circuit requiring a large current is provided, performance problems will occur as sufficient S/N ratio and sensitivity cannot be obtained.

By contrast, when the sequential scan image pickup means of the present invention is used, smooth slow motion video can be achieved because images can be captured at double speed while operating the CCD image sensor at the clock frequency of 74.176 MHz.

In the image pickup apparatus described in the section of the prior art, a VTR was used as the video storing means, but by using a hard disk as the video storing means, it has become possible to output the video of the same frame successively any number of times without requiring the use of a separate memory. The hard disk has excellent random access ability and can easily output the video of the same frame successively a plurality of times; however, in the case of the VTR, this is difficult to achieve, and therefore, a separate memory circuit has had to be provided. On the other hand, in the present invention, the video can be read out and played back by using only the hard disk, without requiring the provision of a separate memory circuit.

Furthermore, in the video storing means, since the incoming sequential scan video signal is compressed and recorded as compressed information on the recording medium, and the sequential scan video signal is played back by expanding the information read out of the recording medium, it has become possible to lower the data transfer rate to the recording medium. Generally, a high definition video signal has a larger amount of information than conventional video signals such as the NTSC video signal, and requires the provision of a large capacity storage medium in the video storing means and a high transfer rate. However, by employing information compression/expansion schemes, the transfer rate can be lowered, and the apparatus can thus be implemented easily.

In the present embodiment, when the number of frames of the sequential scan video signal written and stored in the video storing means is denoted by j, and the number of frames of the sequential scan video signal read out for playback is denoted by k, the sequential scan video signal is read out for playback at a rate of k = 1 or k = 2 for j = 1, to achieve 1/2 or 1/4 speed slow motion video, but it will be appreciated that, by varying the ratio j:k, speed conversion at various ratios can be achieved.

In the present embodiment, a hard disk is used as the video storing means, but instead, a large capacity semiconductor memory may be used.

Furthermore, in the present embodiment, a sequential scan video camera with an effective screen of 720 vertical scan lines and a frame frequency of 59.94 Hz is used as the sequential scan image pickup means, but alternatively, a sequential scan video camera with an effective screen of 480 vertical scan lines and a frame frequency of 59.94 Hz may be used, and the sequential scan/interlaced scan converting means may be constructed using a circuit that converts the sequential scan video signal of an effective screen of 480 vertical scan lines and a frame frequency of 59.94 Hz into an interlaced scan video signal. In this case, though the resolution is lower than that achieved by the present embodiment, the same effect can be obtained for the conversion along the time axis, and smooth slow motion video can be achieved.

Further, in the present embodiment, a sequential scan video camera with a frame frequency of 59.94 Hz is used as the sequential scan image pickup means, and a sequential scan/interlaced scan conversion circuit that converts the sequential scan video signal of a frame frequency of 59.94 Hz into the interlaced scan video signal of a field frequency of 59.94 Hz is used as the sequential scan/interlaced scan converting means, but alternatively, a sequential scan video camera with a frame frequency of 50 Hz may be used as the sequential scan image pickup means, and a sequential scan/interlaced scan conversion circuit that converts the sequential scan video signal of a frame frequency of 50 Hz into an interlaced scan video signal of a field frequency of 50 Hz may be used as the sequential scan/interlaced scan converting means; in that case also, a similar effect can be obtained, and smooth slow motion video can be achieved.

As described above, according to the present embodiment, with the provision of the sequential scan image pickup means, the video storing means of storing and playing back the sequential scan video signal obtained from the sequential scan image pickup means, and the sequential scan/interlaced scan converting means of converting the sequential scan video signal for one frame played back by the video storing means into the interlaced scan video signal for two fields, a marked effect of being able to produce smooth, high definition slow motion video can be obtained by preventing the interlaced scan video signal output from the sequential scan/interlaced scan converting means, i.e., the slow motion video, from shifting in phase in the vertical direction or becoming discontinuous video moving backward in time.

The present invention includes a program for causing a computer to carry out the functions of all or part of the means (or devices, elements, etc.) of the recording and playback apparatus of the invention described above, wherein the program operates in collaboration with the computer.

Further, the present invention includes a recording medium holding thereon a program for causing a computer to carry out all or part of the functions of all or part of the means (or devices, elements, etc.) of the recording and playback apparatus of the invention described above, wherein the program which is readable by the computer is read by the computer and carries out the functions in collaboration with the computer.

Here, "part of the means (or devices, elements, etc.)" of the present invention described above refers to one or more of the plurality of means, and "part of the steps (or processes, operations, effects, etc.)" of the present invention described above refers to one or more of the plurality of steps.

Further, "the functions of the means (or devices, elements, etc.)" of the present invention described above refers to the functions of all or part of the means, and "the operation of the steps (or processes, operations, effects, etc.)" of the present invention described above refers to the operation of all or part of the steps.

In one utilization mode of the program of the present invention, the program may be recorded on a recording medium readable by a computer, and be operated in collaboration with the computer.

In another utilization mode of the program of the present invention, the program may be transmitted through a transmission medium, be read by a computer, and be operated in collaboration with the computer.

The data structure of the present invention includes a data base, data format, data table, data list, data type, etc.

The recording medium includes a ROM or the like, and the transmission medium includes a transmission medium such as the Internet, light waves, radio waves, or sound waves.

The computer of the present invention described above is not limited to pure hardware such as a CPU, but may include firmware, an OS, and even a peripheral device.

As described above, the configuration of the present invention may be implemented in software or in hardware.

### POTENTIAL FOR UTILIZATION IN INDUSTRY

As is apparent from the above description, the present invention is able to provide a recording and playback apparatus that produces smooth, high definition slow motion video by preventing the interlaced scan video signal output from the sequential scan/interlaced scan converting means, i.e., the slow motion video, from shifting in phase in the vertical direction or becoming discontinuous video moving backward in time, and also provide an image pickup apparatus, a recording and playback method, a program, and a recording medium for use with the recording and playback apparatus.

## Claims

1. A recording and playback apparatus comprising:
video storing means of recording and playing back the sequential scan video signal captured by a sequential scan image pickup means through a light input and output from the sequential scan image pickup means for i frames (i is an integer not smaller than 1) over a period of time T1 (T1 is a positive number); and
sequential scan/interlaced scan converting means of generating an interlaced scan video signal for m fields (m is an integer not smaller than 2) from each frame of the played back i-frame sequential scan video signal, wherein
the interlaced scan video signal is output for i × m fields over a period of time T2 (T2 is a number larger than T1) .

2. A recording and playback apparatus as set forth in claim 1, wherein
when playing back the recorded sequential scan video signal, the video storing means plays back the recorded sequential scan video signal of the i frames over the period of time T2, and
the sequential scan/interlaced scan converting means generates the interlaced scan video signal of the m fields from each frame of the played back sequential scan video signal of the i frames over the period of time T2.

3. A recording and playback apparatus as set forth in claim 1, wherein
when playing back the recorded sequential scan video signal, the video storing means plays back the recorded sequential scan video signal of the i frames over the period of time T1, and
the sequential scan/interlaced scan converting means generates the interlaced scan video signal of the m fields from each frame of the played back sequential scan video signal of the i frames over the period of time T2.

4. A recording and playback apparatus as set forth in claim 1, wherein
the sequential scan image pickup means is a sequential scan video camera with an effective screen of 720 vertical scan lines and a frame frequency of 59.94 Hz,
the sequential scan video signal is a sequential scan video signal defining an effective screen of 720 vertical scan lines with a frame frequency of 59.94 Hz, and
the interlaced scan video signal is an interlaced scan video signal defining an effective screen of 1080 vertical scan lines with a field frequency of 59.94 Hz.

5. A recording and playback apparatus as set forth in claim 1, wherein the video storing means is a hard disk which stores and plays back the captured sequential scan video signal.

6. A recording and playback apparatus as set forth in claim 1, wherein the video storing means stores the input sequential scan video signal on a recording medium after compressing information of the sequential scan video signal, and plays back the sequential scan video signal by expanding the information read out of the recording medium.
